# EUROPÄISCHE PATENTSCHRIFT

(11) **EP 1 661 937 B1**
(45) Veröffentlichungstag und Bekanntmachung des Hinweises auf die Patenterteilung: **23.02.2011**
(21) Anmeldenummer: 05111068.2
(22) Anmeldetag: 22.11.2005
(51) Int. Cl.: C08J 5/24, A61G 17/08, B29C 70/46

(54) **Biologisch abbaubarer Formkörper, insbesondere Bestattungsurne und/oder Aschekapsel, sowie Halbzeug und Verfahren zur Herstellung eines solchen Formkörpers**
Biodegradable container, especially a burial urn or an ash capsule, as well as pre-fabricated material for and method of producing said container
Récipient biodégradable, en particulier une urne funéraire, ainsi que le matériau préfabriqué et la méthode pour produire ce récipient

(30) Priorität: 25.11.2004 DE 102004057079; 26.11.2004 DE 102004058028; 05.02.2005 DE 102005005406; 26.05.2005 DE 102005024791
(43) Veröffentlichungstag der Anmeldung: 31.05.2006
(73) Patentinhaber: Loki Verwaltungsgesellschaft mbH & Co. KG, 28209 Bremen (DE)
(72) Erfinder: Frenzel, Karsten, 26197 Großenkneten (DE)
(74) Vertreter: Siekmann, Gunnar

(56) Entgegenhaltungen:
- EP-A- 0 736 296
- EP-A- 1 342 544
- GB-A- 2 349 600
- US-A- 5 443 780

## Beschreibung

Die Erfindung betrifft einen biologisch abbaubaren Formkörper, nämlich eine im Spritzgußverfahren hergestellte Bestattungsurne und/oder Aschekapsel, aus einem Faserverbundwerkstoff einem Bindemittel, sowie ein Verfahren zur Herstellung eines solchen Formkörpers.

Ein solcher Formkörper ist aus DE 196 08 261 A1 bekannt.

Es sind Formkörper bekannt geworden, welche aus lignozellulosehaltigen Spänen oder Fasern als Bewehrung und einem Kunstharz als Bindemittel hergestellt sind. Die Formkörper werden nach dem Zusammenfügen der Bewehrung und des Bindemittels gepreßt, um eine ausreichende Festigkeit des Formkörpers zu erhalten. Nachteilig bei diesen Formkörpern ist jedoch, daß sie bei ihrer Verbrennung oder Verrottung umweltbelastende Stoffe an ihre Umgebung abgeben. Lignozellulosehaltige Formkörper, welche in einem reinen Gießverfahren ohne anschließendes Pressen hergestellt sind, zum Beispiel poröse Faserplatten, verfügen nur über eine unzureichende Festigkeit. Auch sie geben bei der Verbrennung oder Verrottung umweltbelastende Stoffe ab.

Die Erfindung befaßt sich insbesondere mit Bestattungsurnen und den darin eingesetzten Aschekapseln. Bekanntlich werden Grabstätten nur für eine bestimmte Zeit von den Angehörigen eines Verstorbenen gekauft. Wird nach Ablauf dieser vorbestimmten Zeit der Kauf der Grabstätte nicht verlängert, muß das Grab abgeräumt werden und es wird erneut für einen anderen Verstorbenen zur Verfügung gestellt. Während dieser vorbestimmte Zeitraum in früheren Tagen noch bei bis zu 30 Jahren lag, sehen immer mehr Friedhofsordnungen eine Kaufzeit von nur noch 20 Jahren vor, wobei eine weiter abnehmende Tendenz zu erkennen ist. Innerhalb dieser Zeit sollte auch eine Urne möglichst vollständig verrottet sein, damit bei einer nachfolgenden Bestattung nicht mehr auf diese Urne gestoßen wird. Bei anonymen Gräberfeldern wird dieses sogar von den meisten Friedhofsordnungen vorgeschrieben. Die bisher üblichen Urnen aus Kupfer- oder Aluminiumblech verbieten sich daher an dieser Stelle, da sie sehr lange Verrottungszeiten aufweisen. Darüber hinaus geben sie zum Teil Schwermetalle an das Erdreich ab, welche im Extremfall sogar in das Grundwasser gelangen können.

Zur Vermeidung dieses Nachteils wird durch die DE 196 08 261 A1 eine Urne vorgeschlagen, welche aus einer Bewehrung aus Naturfasern mit einem Bindemittel aus zum Beispiel Stärke besteht. Diese Urne soll im Spritzgußverfahren hergestellt werden und ist biologisch abbaubar. Offen bleibt, wie die Urne aus den Ausgangsstoffen konkret hergestellt werden soll.

Aus der DE 197 44 331 A1 ist eine Urne oder ein Sarg bekannt, welcher aus Polymilchsäure (Polylactid) hergestellt ist. Eine Bewehrung enthält dieser Formkörper nicht. Ein Formkörper aus reinem Polylactid ist aber vergleichsweise spröde und muß daher sehr dickwandig und damit schwer und teuer hergestellt werden.

Die GB 2 349 600 A offenbart einen Verbundwerkstoff aus biologisch abbaubaren Faserlagen mit biologisch abbaubaren Bindemittel. Bei der Herstellung des Verbundwerkstoffes wird zunächst eine untere Faserlage in eine Form eingelegt, dann in das Bindemittel darauf verteilt und schließlich eine zweite Faserlage auf das Bindemittel gelegt und sodann mittels eines Stempels verpreßt. Dabei läßt sich nur ein verhältnismäßig flächiger Formkörper herstellen. Formkörper mit hohem seitlichen Wandungen, wie die hier in Rede stehenden Bestattungsurnen oder Aschekapseln lassen sich auf diese Weise nicht herstellen.

Hiervon ausgehend liegt der Erfindung zunächst das Problem zugrunde, einen biologisch abbaubaren Formkörper, insbesondere eine Bestattungsurne und/oder eine Aschekapsel, zu schaffen, welcher haltbar ist und sich leicht herstellen läßt.

Zur Lösung dieses Problems ist der erfindungsgemäße Formkörper nach Anspruch 1 durch eine Bewehrung aus einem natürlichen Faserstoff gekennzeichnet. Das erfindungsgemäße Verfahren nach Anspruch 4 ist dadurch gekennzeichnet, daß zunächst Pellets aus dem Bindemittel und der Bewehrung hergestellt, diese bei einer Temperatur von 170°C bis 230°C aufgeschmolzen und der Formkörper aus dieser Schmelze spritzgegossen wird.

Der Formkörper kann also bakteriell oder durch andere biologische Maßnahmen vollständig abgebaut werden, ohne daß dabei umweltbelastende Stoffe in das Erdreich gelangen. Als Bewehrung eignen sich insbesondere natürliche Faserstoffe, wie beispielsweise Holzfasern, Hanf, Flachs, Sisal, Jute oder Kenaf sowie Mischungen aus diesen Faserstoffen in unterschiedlichsten Mischungsverhältnissen. Als Bindemittel wird ein, insbesondere thermoplastisches, Polymer verwendet. Als Beispiel seien hier Polylactide (PLA - Polylactic Acid) genannt. Ein aus diesen Materialen hergestellter Formkörper ist sogar kompostierbar, bildet also bei seinem biologischen Abbau Humus. Der Anteil der Bewehrung am Gesamtformkörpergewicht sollte 30 bis 50 Gew.-% betragen.

Die Erfindung wird nachfolgend anhand von in der Zeichnung dargestellten Ausführungsbeispielen näher erläutert. In der Zeichnung zeigen:
- Fig. 1: ein erstes Ausführungsbeispiel für einen Formkörper mit den Erfindungsmerkmalen, nämlich eine Aschekapsel, in Seitenansicht,
- Fig. 2: ein zweites Ausführungsbeispiel für einen Formkörper mit den Erfindungsmerkmalen, nämlich eine Urne mit Deckel, in Seitenansicht,
- Fig. 3: ein weiteres Ausführungsbeispiel für einen Formkörper mit den Erfindungsmerkmalen, nämlich eine Urne mit Deckel, in Seitenansicht.

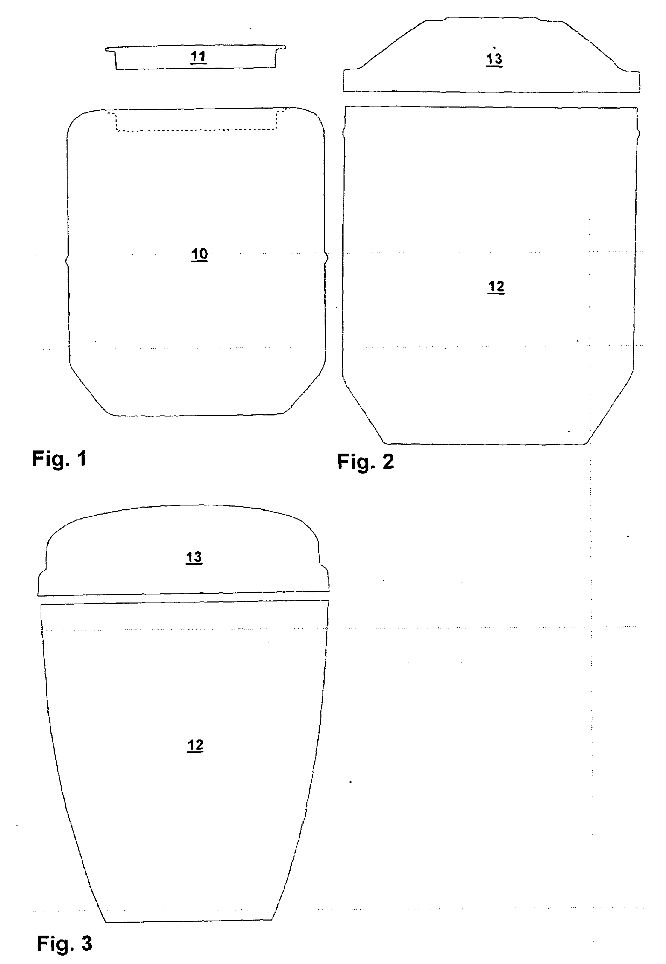

Fig. 1 zeigt eine Aschekapsel 10, welche mit einem Deckel 11 verschlossen wird. Der Deckel 11 ist dabei aus Aluminium oder einem anderen verrottungsbeständigen Material hergestellt, da er die Daten des Verstorbenen sowie des Krematoriums aufweist. Der Deckel 11 muß deshalb stets erhalten bleiben, um den Verstorbenen auch später noch identifizieren zu können. Ferner kommt in die Aschekapsel 10 neben der Asche des Verstorbenen auch der Sargbegleitstein, der den Sarg mit dem Verstorbenen während der Kremierung begleitet. Der Sargbegleitstein enthält ebenfalls die Daten des Verstorbenen.

In Fig. 2 und 3 sind typische Gestaltungen von Urnen gezeigt. Die Urnen weisen jeweils die eigentliche Urne 12 und einen Deckel 13 auf. In die eigentliche Urne 12 wird die mit dem Deckel 11 verschlossene Aschekapsel 10 eingesetzt und dann die eigentliche Urne mit dem Deckel 13 verschossen. Letzteres erfolgt erst unmittelbar von der Urnenbeisetzung, nachdem die Angehörigen die Korrektheit der im Deckel angegeben Daten des Verstorbenen bestätigt haben.

Die insoweit beschriebenen Aschekapsel 10 bzw. Urnen 12 und Deckel 13 werden wie folgt hergestellt:

Eine oder mehrere Lagen einer Bewehrung, nämlich eines Faservlieses oder eines Fasergewebes aus einer natürlichen Faser, wie beispielsweise Holzfasern, Hanf, Flachs, Sisal, Jute oder Kenaf oder auch einer Mischung aus diesen Produkten, werden mit einer oder mehreren Lagen eines Vlieses oder Gewebes aus einer Faser aus einem Polylactid (PLA - Polylactic Acid), wie sie beispielsweise unter der Handelsmarke ingeo™ von der RMB fibers AG, 8166 Niederweningen, Schweiz, vertrieben werden, zusammengeführt. Dabei werden bei mehr als einer Lage der Bewehrung und des Bindemittels diese jeweils schichtweise abwechselnd übereinandergelegt, wobei die äußeren Lagen jeweils von der Bewehrung gebildet werden sollten.

Die Bewehrung wird nun mit dem Bindemittel verbunden, indem die Lagen der Bewehrung und des Bindemittels zu einem Nadelfilz miteinander vernadelt werden. Dieser Faserfilz liegt als Bahnmaterial vor und kann als Rollenware konfektioniert zwischengelagert und gegebenenfalls transportiert werden. Der Nadelfilz stellt somit ein selbständig handelbares Halbzeug dar.

Dieser Nadelfilz wird nun zu Pellets zerkleinert, die dann das Halbzeug zur Herstellung des Formkörpers darstellen.

Um den Formkörper nun aus den Pellets ausformen zu können, werden die Pellets wiederum in einem Ofen soweit erwärmt, daß das Bindemittel vollständig aufschmilzt. Bei einem Polylactid als Bindemittel weist der Ofen zu diesem Zweck eine Temperatur von 170 bis 230° Celsius auf. Nachdem das Bindemittel vollständig aufgeschmolzen ist, bildet sich eine Suspension aus dem verflüssigten Bindemittel und der Bewehrung. Der Formkörper kann im Spritzverfahren ausgeformt werden. In der Spritzgußform wird der Formkörper wiederum soweit abgekühlt, daß das Bindemittel vollständig ausgehärtet ist. Der Formkörper kann nun wieder ausgeformt und auf Umgebungstemperatur weiter abgekühlt werden.

Bei dem zuletzt genannten Ausführungsbeispiel ist es nicht unbedingt erforderlich, die Pellets in einem gesonderten Ofen zu erwärmen. Die Pellets können beispielsweise auch in eine Spritzdüse eingeführt und innerhalb der Spritzdüse auf eine Temperatur oberhalb der Schmelztemperatur des Bindemittels erwärmt werden.

Ferner ist es auch möglich, den Nadelfilz vor dem Zerkleinern so zu erwärmen, daß das Bindemittel bereits schmilzt, und dann abzukühlen. Auf diese Weise entstehen festere Pellets. Sie müssen dann zum Spritzgießen allerdings erneut erwärmt werden. Schließlich besteht auch die Möglichkeit, den erwärmten Nadelfilz mit dem aufgeschmolzenen Bindemittel zu zerkleinern und unmittelbar spritzzugießen.

Als Ofen zum Erwärmen des Halbzeugs nach den vorstehend genannten Ausführungsbeispielen eignen sich Kontaktöfen, Konvektionsöfen, Infrarotstrahler oder alle anderen gängigen Öfen zum Erwärmen von Stoffen.

## Patentansprüche

1. Biologisch abbaubarer Formkörper (10, 12), nämlich eine im Sprizgußverfahren hergestellte Bestattungsurne (12) und/oder Aschekapsel (10), aus einem Faserverbundwerkstoff einem Bindemittel, und einer Bewehrung aus einem natürlichen Faserstoff, **dadurch gekennzeichnet, dass** das Bindemittel ein Polylactid (PLA - Polylactic Acid) ist.

2. Formkörper nach Anspruch 1, **dadurch gekennzeichnet, daß** der Anteil der Bewehrung etwa 30 bis 50 Gew.-% des Formkörpergewichtes beträgt.

3. Formkörper nach Anspruch 1 oder 2, **dadurch gekennzeichnet, daß** die Bewehrung aus Holzfasern, Hanf, Flachs, Sisal, Jute und/oder Kenaf besteht.

4. Verfahren zur Herstellung eines Formkörpers (10, 12) nach einem der Ansprüche 1 bis 3, **dadurch gekennzeichnet, dass** zunächst Pellets aus dem Bindemittel und der Bewehrung hergestellt, diese bei einer Temperatur von 170°C bis 230°C aufgeschmolzen und der Formkörper aus dieser Schmelze spritzgegossen wird.

## Claims

1. Biologically degradable shaped body (10, 12), namely a burial urn (12) and/or ash casket (10) produced in an injection-moulding method, consisting of a fibre composite material, a binding agent and a reinforcement made from a natural fibrous material, **characterised in that** the binding agent is a polylactide (PLA polylactic acid).

2. Shaped body according to claim 1, **characterised in that** the proportion of the reinforcement is approximately 30 to 50% by weight of the weight of the shaped body.

3. Shaped body according to claim 1 or 2, **characterised in that** the reinforcement consists of wood fibres, hemp, flax, sisal, jute and/or kenaf.

4. Method for producing a shaped body (10, 12) according to one of claims 1 to 3, **characterised in that** initially pellets are produced from the binding agent and the reinforcement, said pellets being fused at a temperature of 170°C to 230°C and the shaped body being injection-moulded from this melt.

## Revendications

1. Corps moulé biodégradable (10, 12), plus particulièrement une urne funéraire (12) et/ou une capsule cinéraire (10) réalisée(s) par un procédé de moulage par injection, constitué d'un matériau composite comportant des fibres, d'un liant et d'une armature constituée d'une matière fibreuse naturelle, **caractérisé en ce** qui ledit liant est un polylactide (PLA - Polylactic Acid).

2. Corps moulé selon la revendication 1, **caractérisé en ce que** la proportion de ladite armature est comprise entre 30 et 50 % en poids, par rapport au poids dudit corps moulé.

3. Corps moulé selon les revendications 1 ou 2, **caractérisé en ce que** ladite armature est constituée de fibres de bois, de chanvre, de fibres de lin, de sisal, de jute et/ou de kenaf.

4. Procédé de fabrication d'un corps moulé (10, 12) selon l'une des revendications 1 à 3, **caractérisé en ce que** l'on réalise d'abord des granulés constitués dudit liant et de ladite armature, pour ensuite les faire fondre à une température comprise entre 170 °C et 230 °C et réaliser ledit corps moulé à partir de cette matière fondue par moulage par injection.
